# DEMANDE DE BREVET EUROPEEN

(11) **EP 1 619 478 A2**
(43) Date de publication de la demande: **25.01.2006**
(21) Numéro de dépôt: 05291220.1
(22) Date de dépôt: 07.06.2005
(51) Int. Cl.: G01D 11/24, B62J 39/00

(54) **Dispositif de détection de paramètre de rotation d'une roue, notamment d'une roue de véhicule**

(30) Priorité: 22.06.2004 FR 0406789
(71) Demandeur: Aktiebolaget SKF (publ), S-415 50 Göteborg (SE)
(72) Inventeur: Niarfeix, Francois, 37000 Tours (FR); Chaussat, Sylvain, 37100 Tours (FR)
(74) Mandataire: Casalonga, Axel

(57) **Abrégé**

Le dispositif de détection de paramètres de rotation d'une roue, notamment d'une roue de véhicule, destiné à être monté sur un axe de la roue entre un bras d'une fourche et un moyeu tournant de ladite roue, est pourvu d'un roulement 4 du type comprenant une bague extérieure 9, une bague intérieure 8, et une rangée d'éléments roulants 10 disposés entre des chemins de roulements desdites bagues, le dispositif comprenant un élément codeur 17 monté sur la bague extérieur 9, un élément capteur 18 équipé d'au moins un capteur 24 situé sensiblement en regard dudit élément codeur 17, et un fourreau 2 pourvu d'un manchon 14 sur lequel est montée la bague intérieure 8 et d'une portion annulaire 15 entourant au moins une portion de la bague extérieure. Le dispositif comprend, en outre, un organe élastique d'entraînement 6, monté sur la bague extérieure 9 axialement du côté opposé à l'élément codeur 17, et comprenant une surface annulaire de contact 6a avec le moyeu de manière à entraîner en rotation par friction la bague extérieure 9 du roulement.

## Description

La présente invention concerne le domaine des dispositifs de détection de paramètres de rotation d'une roue, notamment utilisés pour les roues des motos, et en particulier pour les roues avant de trials.

La présente invention concerne plus particulièrement un dispositif de détection de paramètres de rotation d'une roue destiné à être monté sur un axe de la roue entre un bras d'une fourche et un moyeu tournant de ladite roue, le dispositif étant pourvu d'un roulement du type comprenant une bague extérieure, une bague intérieure, et une rangée d'éléments roulants disposés entre des chemins de roulement desdites bagues.

On connaît, par le document JP-A-2001-337 097, un dispositif de détection de vitesse d'une roue, monté entre un bras d'une fourche et un moyeu de ladite roue, et comprenant un boîtier extérieur annulaire fixe pourvu d'un capteur et d'un manchon monté sur l'axe de la roue, un boîtier intérieur annulaire monté à rotation sur ledit manchon, par l'intermédiaire de deux roulements. Le boîtier intérieur comprend une série d'éléments de codage agencés de façon périodique en regard du capteur, et deux doigts d'indexation, diamétralement opposés, aptes à coopérer avec des logements de forme correspondante du moyeu de manière à entraîner en rotation le boîtier intérieur pour permettre la détection de la vitesse de la roue.

Un tel dispositif de détection de vitesse d'une roue présente l'inconvénient d'engendrer un usinage spécifique du moyeu de la roue afin de permettre le montage des doigts d'indexation. De tels doigts d'indexation présentent, en outre, l'inconvénient de nécessiter, lors du montage du dispositif, un réglage afin de solidariser le moyeu et le boîtier intérieur. Par ailleurs, le dispositif de détection présente un encombrement relativement important.

La présente invention vise à remédier à ces inconvénients en proposant un dispositif de détection de paramètres de rotation d'une roue particulièrement facile à monter et relativement compact.

A cet effet, le dispositif de détection de paramètres de rotation d'une roue notamment d'une roue de véhicule, destiné à être monté sur un axe de la roue entre un bras d'une fourche et un moyeu tournant de ladite roue, est pourvu d'un roulement du type comprenant une bague extérieure, une bague intérieure, et une rangée d'éléments roulants disposés entre des chemins de roulement desdites bagues. Le dispositif comprend un élément codeur monté sur la bague extérieure, un élément capteur équipé d'au moins un capteur sensiblement en regard du type d'élément codeur, et un fourreau pourvu d'un manchon sur lequel est montée la bague intérieure, et d'une portion annulaire entourant au moins une portion de la bague extérieure. Le dispositif comprend, en outre, un organe élastique d'entraînement, monté sur la bague extérieure axialement du côté opposé à l'élément codeur, et comprenant une surface annulaire de contact avec le moyeu de manière à entraîner en rotation, par contact de friction, la bague extérieure du roulement.

Un tel dispositif de détection, de structure particulièrement simple, présente l'avantage de comprendre un organe élastique d'entraînement par contact de friction, monté entre la bague tournante du roulement et le moyeu de la roue, permettant un montage rapide ainsi qu'une grande adaptabilité du dispositif de détection tout en se dégageant de contraintes de montage particulièrement coûteuses et complexes, comme l'usinage du moyeu de la roue, et de contraintes de réglage du dispositif. En effet, l'entraînement en rotation de la bague extérieure du roulement par friction permet de pouvoir disposer sur l'organe d'entraînement une surface de contact avec le moyeu, sensiblement plane et dépourvue d'éléments en saillie formant dents d'engrènement et nécessitant un réglage lors du montage. L'organe élastique est ainsi monté par simple poussée axiale, sans indexation angulaire.

Le dispositif de détection présente également l'avantage de comprendre un élément codeur monté directement sur la bague extérieure du roulement réduisant ainsi le nombre de pièces à assembler et favorisant la compacité du dispositif.

Par ailleurs, le dispositif de détection muni d'un tel organe d'entraînement permet de limiter sensiblement d'éventuels risques de détérioration du dispositif, lors de manipulations pendant le transport ou le montage, pouvant engendrer un dysfonctionnement.

Avantageusement, le roulement comprend une simple rangée de billes. L'utilisation d'un tel roulement favorise la compacité du dispositif de détection.

Le fourreau peut comprendre une nervure annulaire en appui sur une surface radiale de la bague intérieure, axialement du côté de l'élément codeur.

De préférence, l'organe élastique d'entraînement coopère avec une surface radiale de la bague extérieure et s'étend radialement vers l'extérieur en direction de la portion annulaire du fourreau.

Le fourreau monté en appui contre la bague intérieure du roulement et entourant la bague extérieure, et l'organe élastique d'entraînement permettent de réduire une éventuelle pollution du capteur et de l'élément codeur par le milieu extérieur. L'organe élastique d'entraînement permet non seulement d'entraîner en rotation la bague extérieure du roulement lors de la rotation du moyeu, mais également de limiter l'intrusion d'éléments extérieurs à l'intérieur du fourreau.

Dans un mode de réalisation, l'organe élastique d'entraînement, le fourreau et un élément extérieur au dispositif définissent une chambre étanche à l'intérieur de laquelle est monté le roulement.

De préférence, le dispositif comprend un élément d'étanchéité, monté axialement entre l'organe élastique d'entraînement et l'élément codeur, est monté en contact avec une surface cylindrique de révolution de la bague extérieure et une portée cylindrique du fourreau.

Un tel dispositif de détection présente l'avantage de comprendre un élément d'étanchéité permettant d'empêcher l'intrusion d'agents extérieurs à l'intérieur du roulement, mais également au niveau des éléments capteur et codeur. Le dispositif de détection, généralement soumis à une pollution intense par des projections diverses, notamment de terre et de boue, présente donc un risque limité de détérioration de ses éléments, augmentant ainsi la fiabilité ainsi que la durée de vie dudit dispositif.

Dans un mode de réalisation, l'organe d'étanchéité comprend au moins une armature rigide en contact avec la portée cylindrique du fourreau et une lèvre d'étanchéité en contact avec la surface extérieure cylindrique de révolution de la bague extérieure.

Avantageusement, le fourreau, le manchon, le roulement et l'élément d'étanchéité définissent une chambre étanche à l'intérieur de laquelle sont montés l'élément codeur et le capteur.

De préférence une extrémité libre de la portion annulaire est décalée axialement vers l'extérieur par rapport à une surface radiale de la bague extérieure, et destinée à venir à proximité d'une surface radiale du moyeu pour former un passage étroit d'étanchéité.

Le manchon peut comprendre une première surface radiale d'appui sur un roulement apte à permettre la rotation de la roue, et une seconde surface radiale d'appui sur une surface de positionnement, axialement à l'opposé de ladite première surface d'appui, le manchon étant apte à transmettre des efforts axiaux entre le roulement et la surface de positionnement.

Le capteur peut être situé radialement entre une bague extérieure du roulement et la portion annulaire du fourreau.

Avantageusement, le fourreau, le manchon et la portion annulaire sont monoblocs.

L'invention concerne également un véhicule à deux roues comprenant un dispositif de détection de paramètres de rotation d'une roue selon un aspect de l'invention.

L'invention concerne enfin un dispositif de détection de paramètres de rotation d'une roue notamment d'une roue de véhicule, destiné à être monté sur un axe de la roue entre un bras d'une fourche et un moyeu tournant de ladite roue, est pourvu d'un roulement du type comprenant une bague extérieure, une bague intérieure, et une rangée d'éléments roulants disposés entre des chemins de roulement desdites bagues. Le dispositif comprend un élément codeur monté sur la bague extérieure, un élément capteur équipé d'au moins un capteur sensiblement en regard du type d'élément codeur, un fourreau annulaire à l'intérieur duquel est monté le roulement, un élément d'étanchéité décalé axialement vers l'extérieur par rapport aux éléments codeur et capteur, et monté en contact avec une surface extérieure cylindrique de révolution de la bague extérieure et une portée cylindrique du fourreau. Le dispositif comprend, en outre, un organe élastique d'entraînement monté sur la bague extérieure et décalé axialement vers l'extérieur par rapport à l'élément d'étanchéité, et comprenant une surface annulaire de contact avec le moyeu de manière à entraîner en rotation par friction la bague extérieure du roulement, ledit organe élastique d'entraînement, le fourreau et un élément extérieur au dispositif formant une chambre étanche à l'intérieur de laquelle est disposée le roulement.

La présente invention sera mieux comprise à la lecture de la description détaillée d'un mode de réalisation pris à titre d'exemple nullement limitatif et illustré par les dessins annexés, sur lesquels :
- la figure 1 est une vue en coupe axiale d'un dispositif de détection de paramètres de rotation d'une roue selon un aspect de l'invention,
- les figures 2 et 3 sont des vues en perspective du dispositif de la figure 1, et
- la figure 4 est une vue schématique en coupe axiale du dispositif de la figure 1 monté sur un axe d'une roue.

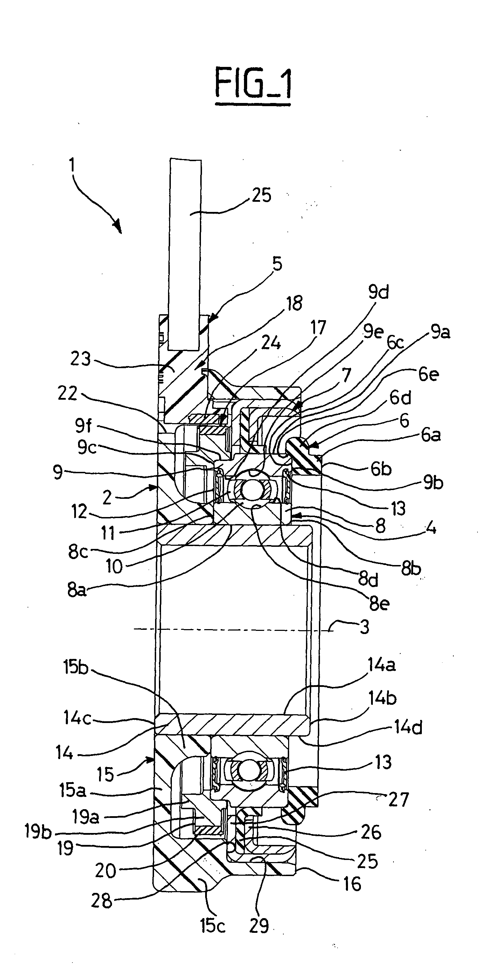

Comme on peut le voir sur la figure 1, le dispositif de détection, référencé 1 dans son ensemble, comprend un fourreau 2 d'axe géométrique 3, un roulement 4, un ensemble de détection 5 de paramètres de rotation du roulement, un organe élastique d'entraînement 6 du roulement 4, et un élément d'étanchéité 7 monté entre ledit roulement 4 et le fourreau 2.

Le roulement 4 à gorge profonde et à faces latérales radiales, présente un faible coût de fabrication, et comprend une bague intérieure 8, une bague extérieure 9, entre lesquelles sont logés une rangée d'éléments roulants 10 réalisés ici sous forme de billes, une cage 11 de maintien de l'espace circonférentiel des éléments roulants 10, et deux joints d'étanchéité 12 et 13 métalliques.

La bague intérieure 8 est de type massif. On entend par « bague de type massif » une bague dont la forme est obtenue par usinage avec enlèvement de copeaux (tournage, rectification) à partir de tubes, de barres, d'ébauches forgées et/ou roulées. La bague intérieure 8 comprend un alésage 8a de forme cylindrique délimité par des surfaces latérales radiales 8b et 8c opposées, et une surface cylindrique extérieure 8d à partir de laquelle est formée une gorge circulaire 8e présentant en section droite un profil interne concave apte à former un chemin de roulement pour les éléments roulants 10, ladite gorge étant orientée vers l'extérieur.

La bague extérieure 9, également de type massif, comprend une surface cylindrique extérieure 9a délimitée par des surfaces latérales radiales 9b et 9c opposées, et un alésage 9d de forme cylindrique à partir duquel est formée une gorge circulaire 9e présentant en section droite un profil interne concave apte à former un chemin de roulement pour les éléments roulants 10, ladite gorge étant orientée vers l'intérieur. La bague extérieure 9 comprend, au niveau de la surface cylindrique extérieure 9a et à proximité de la surface radiale 9c, un décrochement formant une portée annulaire 9f d'un diamètre inférieur à la surface extérieure cylindrique 9a.

La bague extérieure 9 comprend également, au niveau de l'alésage 9d et à proximité des surfaces radiales 9b et 9c, deux rainures annulaires symétriques entre elles par rapport à un plan passant par le centre des éléments roulants 10. A l'intérieur desdites rainures sont montés les joints d'étanchéité 12 et 13, venant à proximité de portions de la surface extérieure cylindrique 8d de la bague intérieure 8 formant des passages étroits. Les joints d'étanchéité 12, 13 sont disposés radialement entre les bagues intérieure et extérieure 8, 9. Le joint d'étanchéité 12 est monté axialement entre les éléments roulants 10 et les surfaces radiales 8c et 9c des bagues 8 et 9, le joint d'étanchéité 13 étant monté axialement entre les éléments roulants 10 et les surfaces radiales 8b, 9b, desdites bagues 8 et 9.

Le fourreau 2 comprend un manchon 14 tubulaire métallique pourvu d'un alésage 14a délimité par des surfaces latérales radiales 14b et 14c opposées, et d'une surface extérieure cylindrique 14d sur laquelle est emmanchée la bague intérieure 8 du roulement 4, et un corps 15, fixé à une extrémité axiale dudit manchon 14.

Le corps 15, de forme générale annulaire, présente en section droite un profil en forme de C. Le corps 15, réalisé en matière synthétique moulée, par exemple en matière plastique, comprend une portion radiale 15a en contact avec la surface extérieure 14d du manchon 14, et s'étendant vers l'extérieur. La portion radiale 15a se prolonge, à partir d'un bord de petit diamètre, axialement vers le roulement 4, par une nervure 15b annulaire formant appui pour la surface radiale 8c de la bague intérieure 8. La portion radiale 15a se prolonge, à partir d'un bord de grand diamètre, par une portion annulaire 15c externe s'étendant axialement du côté de la nervure 15b. La portion annulaire 15c externe présente une extrémité libre 16 décalée axialement vers l'extérieur par rapport aux surfaces radiales 8b, 9b des bagues 8, 9. En d'autres termes, la portion annulaire 15c du corps 15 entoure le roulement 4.

La portion radiale 15a, la nervure 15b et la portion annulaire 15c du corps 15 sont monoblocs. Le corps 15 est ici surmoulé sur le manchon 14, de manière à former le fourreau 2. Bien entendu, il est également envisageable de prévoir un fourreau 2 comprenant un manchon 14 et un corps 15 réalisés dans la même matière, avantageusement moulée.

L'ensemble de détection 5 de paramètres de rotation comprend un élément codeur 17 solidaire de la bague extérieure 9 du roulement 4, et un élément capteur 18 monté sur le corps 15.

L'élément codeur 17 comprend un corps 19 de codeur, de forme annulaire à section en L, avec une portion axiale 19a directement en contact avec la surface radiale 9c et la portée cylindrique 9f de la bague extérieure 9, ladite portion axiale 19a étant prolongée, vers l'extérieur en direction de la portion tubulaire 15c du corps 15, par une portion radiale 19b pourvue d'une partie active 20 sur sa périphérie. Le corps 19 peut être réalisé en métal, par exemple en alliage léger, et emmanché directement sur la bague extérieure 19. La partie active 20 peut par exemple être formée en élastoferrite, c'est-à-dire avec un mélange à base de nitrile et de particules de ferrite magnétisées, ladite partie active 20 pouvant être surmoulée sur le corps 19. La partie active 20, de forme générale annulaire, comprend une surface intérieure montée sur le corps 19 de codeur et une surface extérieure pourvue d'une alternance régulière de pôles magnétiques de polarités opposées, « nord » et « sud », non représentés, formant ainsi un motif périodique constitué d'un pôle « nord » et d'un pôle « sud » répété un nombre entier de fois lorsqu'on parcourt la circonférence de la partie active 20.

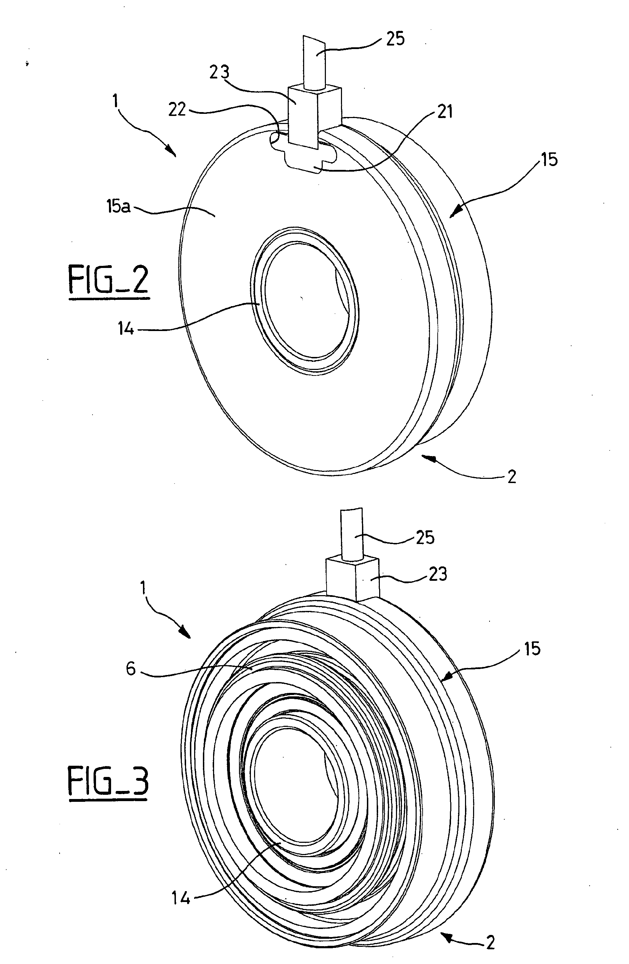

L'élément capteur 18 comprend un support 21 de capteur (figure 2), de forme générale en T, monté de façon étanche à l'intérieur d'un évidemment 22 de forme correspondante et situé à une extrémité extérieure de la portion radiale 15a du corps 15. Le support 21 de capteur comprend un terminal filaire 23, par exemple réalisé en en matériau synthétique, présentant une forme générale parallélépipédique.

L'élément capteur 18 comprend également une partie active formant capteur 24 monté semi noyé à l'intérieur du terminal filaire 23 et affleurant avec une surface cylindrique de petit diamètre de manière à être monté en regard de la partie active 20 de l'élément codeur 17 avec un faible entrefer radial. Le capteur 24 est du type magnéto sensible, par exemple une sonde à effet Hall. Le capteur 24 et la partie active 20 de l'élément codeur 17 sont disposés à faible distance radiale de la bague extérieure 9 du roulement 4 favorisant la compacité du dispositif de détection 1.

Au niveau d'une portion en saillie par rapport à la surface extérieure du corps 15 du fourreau 2, le terminal filaire 23 de l'élément capteur 18 comprend une sortie de câble pour un câble 25 apte à communiquer les signaux électriques émis par le capteur 24 à d'autres éléments non représentés, par exemple une unité électronique de traitement afin de déterminer notamment la vitesse de déplacement du véhicule sur lequel le dispositif est monté ainsi que la distance parcourue.

L'élément d'étanchéité 7 de forme générale annulaire est monté sur la bague extérieure 9 du roulement 4 axialement entre l'élément codeur 17 et l'organe d'entraînement élastique 6. L'élément d'étanchéité 7 comprend un joint 25, en matière synthétique par exemple en caoutchouc, avec une portion axiale, formant lèvre d'étanchéité et montée en contact avec la surface extérieure cylindrique 9a de la bague extérieure 9. Ladite portion axiale est prolongée à partir d'une extrémité libre par une portion radiale s'étendant en direction de la portion annulaire 15c du corps 15. L'élément d'étanchéité 7 comprend, en outre, deux armatures rigides 26, 27 annulaires métalliques disposées axialement de part et d'autre de la portion radiale du joint 25, et présentant en section droite un profil en forme de L.

L'armature rigide 27 comprend une portion radiale en contact avec une surface radiale 28 de la portion annulaire 15c formant appui, qui est prolongée à partir d'un extrémité supérieure par une portion axiale, l'extrémité libre de la portion radiale étant située radialement à proximité de la surface extérieure cylindrique 9a de la bague extérieure 9. La portion axiale de l'armature rigide 27 est en contact avec une portée cylindrique 29 de la portion annulaire 15c et avec une portion axiale de l'armature rigide 26 qui est prolongée vers l'intérieur par une portion radiale venant en appui contre la portion radiale du joint 25.

L'élément d'étanchéité 7, le fourreau 2 et le roulement 4 forment un logement étanche entre la portion radiale 15a du corps 15 et l'élément d'étanchéité 7, préservant ainsi le capteur 22 et l'élément codeur 17 de l'intrusion de particules polluantes.

L'organe élastique d'entraînement 6, en matière synthétique par exemple en caoutchouc, est de forme générale annulaire. L'organe élastique d'entraînement 6 comprend une portion axiale 6a délimitée par deux surfaces radiales 6b, 6c opposés, la surface 6c étant en appui contre la surface radiale 9b de la bague extérieure 9, et une nervure 6d radiale dirigée vers l'extérieur en direction de la portion annulaire 15c du corps 15 pourvu d'une surface axiale 6e en appui sur la surface extérieure de révolution 9a de la bague 9. L'organe élastique d'entraînement 6 est monté serré sur la bague 9 du roulement 4 et présente un coefficient de friction élevé de manière à pouvoir entraîner en rotation ladite bague 9.

Bien entendu, l'organe élastique d'entraînement 6 peut être collé ou surmoulé sur la bague extérieure 9 du roulement 4.

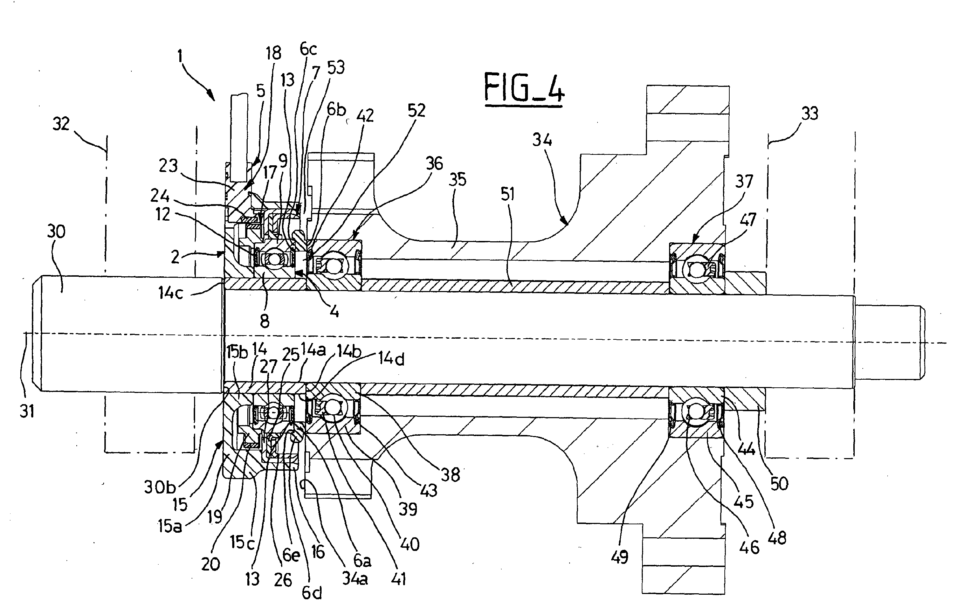

Comme on peut le voir sur la figure 4, le dispositif de détection 1 de paramètres de rotation d'une roue est monté sur un arbre 30 d'axe géométrique 31 entre deux bras 32, 33 d'une fourche (représentés en traits mixtes). L'arbre 30 comprend également un moyeu de roue 34 présentant en section droite une forme générale en C pourvu d'un corps 35 annulaire monté à rotation sur ledit arbre 30 par l'intermédiaire de deux roulements 36, 37 identiques montés à chaque extrémité axiale dudit corps 35. Le roulement 36 comprend une bague intérieure 38, une bague extérieure 39 entre lesquelles sont logés des éléments roulants 40 réalisés ici sous forme de billes, une cage de maintien 41 de l'espace circonférentiel des éléments roulants 40, et deux flasques d'étanchéité 42, 43 métalliques disposés axialement de part et d'autre des éléments roulants 40 et formant des passages étroits. D'une manière analogue, le roulement 37 comprend une bague intérieure 44, une bague extérieure 45, des éléments roulants 46, une cage de maintien 47 et deux flasques d'étanchéité 48, 49 métalliques disposés axialement de par et d'autre des éléments roulants 46. Un organe d'arrêt axial 50, de forme générale annulaire, est monté en appui contre une surface radiale de la bague intérieure 44 de roulement 37 et le bras 33.

Une entretoise 51 assure l'espacement et la transmission des efforts axiaux entre les bagues intérieures 38 et 44 des roulements 36 et 37.

La surface radiale 14c du manchon 14 du fourreau 2 est montée ici en appui sur la bague intérieure 38 du roulement 36, la surface radiale d'appui 14d étant en appui sur une surface de positionnement 30b formée par un épaulement de l'arbre 30. Le manchon 14 permet ainsi le montage du dispositif de détection 1 sur l'arbre 30 mais également la transmission d'efforts axiaux entre le moyeu 34 de roue, l'arbre 30 et les bras de fourche 32 et 33.

L'organe élastique d'entraînement 6 est comprimé axialement en contact, au niveau de la surface radiale 6b annulaire, avec la bague extérieure 39 du roulement 36 du moyeu de manière à permettre l'entraînement en rotation de la bague extérieure 9 du roulement 4 et de l'élément codeur 17 du dispositif de détection 1, lors de la rotation du moyeu 36, afin de permettre la détection de paramètre de rotation de la roue, non représentée, solidaire du moyeu 34. Bien entendu, il est également envisageable de monter l'organe élastique d'entraînement 6 entre la bague extérieure 9 du roulement et la surface latérale radiale 34a du moyeu. Par ailleurs, l'utilisation d'un organe élastique d'entraînement 6 par contact de friction permet de pouvoir monter le dispositif 1 en appui sur une surface latérale 34a plane du moyeu 34 telle que représentée mais également sur une surface latérale d'un moyeu pourvu par exemple de rainures ou de crans.

L'organe élastique d'entraînement 6 précontraint axialement entre la surface radiale 9b de la bague 9 du roulement 4 et la surface radiale de la bague 39 du roulement 36, le manchon 14, l'élément d'étanchéité 7 et le roulement 36 définissent une chambre 52 étanche entre la portion radiale 15a du corps 15 et le roulement 36 à l'intérieur de laquelle est monté le roulement 4. Cette chambre étanche 52 protège efficacement le roulement 4 du dispositif de détection et le roulement 36 du moyeu 34 de roue de toute intrusion de matière polluante.

L'extrémité libre de la portion annulaire 15c disposée à proximité d'une surface radiale 34a du moyeu 34 forme un passage radial 53 étroit favorisant une protection de l'élément codeur 17, et du capteur 24 de l'élément capteur 18 contre des projections de particules extérieures.

Le dispositif de détection de paramètres de rotation de roue offre une solution particulièrement compacte, pouvant s'adapter et se monter rapidement sur un axe de roue. Les éléments sensibles du dispositif de détection sont, en outre, particulièrement bien protégés contre une éventuelle pollution permettant d'accroître sensiblement la durée de vie ainsi que la fiabilité de fonctionnement dudit dispositif.

Le dispositif suivant l'invention est particulièrement adapté à une utilisation dans les roues des trials qui sont amenés à fonctionner dans des conditions environnementales difficiles et où il est nécessaire de pouvoir mesurer avec fiabilité la vitesse de déplacement et la distance parcourue et de pouvoir détecter en compétition une éventuelle marche arrière du véhicule.

## Revendications

1. Dispositif de détection de paramètres de rotation d'une roue, notamment d'une roue de véhicule, destiné à être monté sur un axe (30) de la roue entre un bras (32) d'une fourche et un moyeu (34) tournant de ladite roue, le dispositif étant pourvu d'un roulement (4) du type comprenant une bague extérieure (9), une bague intérieure (8), et une rangée d'éléments roulants (10) disposés entre des chemins de roulements desdites bagues, **caractérisé par le fait que** le dispositif comprend un élément codeur (17) monté sur la bague extérieure, un élément capteur (18) équipé d'au moins un capteur (24) situé sensiblement en regard dudit élément codeur, et un fourreau (2) pourvu d'un manchon (14) sur lequel est montée la bague intérieure, et d'une portion annulaire (15) entourant au moins une portion de la bague extérieure, le dispositif comprenant, en outre, un organe élastique d'entraînement (6), monté sur la bague extérieure axialement du côté opposé à l'élément codeur, et comprenant une surface (6a) annulaire de contact avec le moyeu de manière à entraîner en rotation, par contact de friction, la bague extérieure du roulement.

2. Dispositif selon la revendication 1, **caractérisé par le fait que** le roulement comprend une simple rangée de billes.

3. Dispositif selon la revendication 1 ou 2, **caractérisé par le fait que** le fourreau comprend une nervure (15b) annulaire en appui sur une surface radiale (8c) de la bague intérieure, axialement du côté de l'élément codeur (17).

4. Dispositif selon l'une quelconque des revendications précédentes, **caractérisé par le fait que** l'organe élastique d'entraînement (6) coopère avec une surface radiale (9b) de la bague extérieure et s'étend radialement vers l'extérieur en direction de la portion annulaire du fourreau.

5. Dispositif selon l'une quelconque des revendications précédentes, **caractérisé par le fait que** l'organe élastique d'entrainement (6), le fourreau (2) et un élément extérieur (36) au dispositif définissent une chambre étanche (52) à l'intérieur de laquelle est monté le roulement (4).

6. Dispositif selon l'une quelconque des revendications précédentes, **caractérisé par le fait qu'**il comprend un élément d'étanchéité (7), monté axialement entre l'organe élastique d'entraînement (6) et l'élément codeur (17), et monté en contact avec une surface extérieure cylindrique (9a) de révolution de la bague extérieure et une portée cylindrique (29) du fourreau.

7. Dispositif selon la revendication 6, **caractérisé par le fait que** l'organe d'étanchéité (7) comprend au moins une armature rigide en contact avec la portée cylindrique du fourreau et une lèvre d'étanchéité en contact avec la surface extérieure cylindrique de révolution de la bague extérieure.

8. Dispositif selon la revendication 6 ou 7, **caractérisé par le fait que** le fourreau (2), le manchon (14), le roulement (4) et l'élément d'étanchéité (7) définissent une chambre étanche à l'intérieur de laquelle sont montés l'élément codeur et le capteur.

9. Dispositif selon l'une quelconque des revendications précédentes, **caractérisé par le fait qu'**une extrémité libre (16) de la portion annulaire (15) est décalée axialement vers l'extérieur par rapport à une surface radiale (9b) de la bague extérieure, et destinée à venir à proximité d'une surface radiale (34a) du moyeu pour former un passage (53) étroit d'étanchéité.

10. Dispositif selon l'une quelconque des revendications précédentes, **caractérisé par le fait que** le manchon (14) comprend une première surface radiale (14b) d'appui sur un roulement apte à permettre la rotation de la roue, et une seconde surface radiale d'appui (14c) sur une surface de positionnement (30b), axialement à l'opposée de ladite première surface d'appui, le manchon étant apte à transmettre des efforts axiaux entre le roulement et la surface de positionnement.

11. Dispositif selon l'une quelconque des revendications précédentes, **caractérisé par le fait que** le capteur (24) est situé radialement entre une bague extérieure du roulement et la portion annulaire (15) du fourreau.

12. Dispositif selon l'une quelconque des revendications précédentes, **caractérisé par le fait que** le fourreau (2), le manchon (14) et la portion annulaire (15) sont monoblocs.

13. Véhicule à deux roues comprenant un dispositif de détection de paramètres de rotation d'une roue selon l'une quelconque des revendications précédentes.
